# EUROPEAN PATENT SPECIFICATION

(11) **EP 3 699 005 B1**
(45) Date of publication and mention of the grant of the patent: **06.10.2021**
(21) Application number: 20157773.1
(22) Date of filing: 17.02.2020
(51) Int. Cl.: B60J 5/04, E05B 79/20

(54) **AUTOMOBILE DOOR OPENING AND CLOSING MECHANISM**
AUTOMOBILTÜRÖFFNUNGS- UND -SCHLIESSMECHANISMUS
MÉCANISME D'OUVERTURE ET DE FERMETURE DE PORTE AUTOMOBILE

(30) Priority: 20.02.2019 JP 2019028261
(43) Date of publication of application: 26.08.2020
(73) Proprietor: TOYOTA JIDOSHA KABUSHIKI KAISHA, Toyota-shi, Aichi-ken 471-8571 (JP)
(72) Inventor: HIROZAWA, Yasunori, TOYOTA-SHI, AICHI-KEN, 471-8571 (JP)
(74) Representative: Cabinet Beau de Loménie

(56) References cited:
- WO-A1-2013/108729
- GB-A- 598 633
- US-A- 2 656 214

## Description

### TECHNICAL FIELD

The present disclosure relates to an automobile door opening and closing mechanism and, in particular, to a mechanism that can be operated by a passenger at two or more positions of the body of a vehicle.

### BACKGROUND

Some automobiles have a canopy door that is a type of door that opens and closes as a portion extending from the front and side windows to the ceiling is moved. A canopy door, which is attached to the body of a vehicle at the front via a rotary mechanism, opens and closes as it vertically rotates about the rotary mechanism. JP 2005-88711 A discloses a single-seat automobile that has a canopy door.

### SUMMARY

A typical door of an automobile includes a door latch, and the door is closed as the door latch hooks on to the body of the vehicle. As a door handle associated with the door latch is operated by a passenger, the door latch is unhooked from the body of the vehicle, and the door is opened. Some single-seat canopy door automobiles as disclosed in JP 2005-88711 A include a single door latch at the upper rear end of the canopy door or at a corresponding position of the body of the vehicle.
WO 2013 108729 A1 discloses a door latch release force transmission mechanism. GB 598633 A and US 2656214 A disclose examples of automobile vehicle bodies including canopy doors.

In recent years, research and development is under way to put into practical use canopy door automobiles that are designed to transport two or more passengers. A canopy door spans from side to side of the body of the vehicle, and as such, automobiles that can carry two or more passengers have larger canopy doors than single-seat automobiles. Additionally, single-seat canopy door automobiles also have larger canopy doors when cabin space is increased. It is assumed that such structures with only a single door latch at the rear end of the canopy door may have insufficient mechanical strength when the canopy door is closed. An idea to address this situation is to provide door latches on right and left sides of the canopy door. In this case, the structure for opening and closing the door is complicated, as both door latches on the right and left sides should be operated in response to operation of a door handle on either side.

The present disclosure is directed toward simplifying the structure of a door opening and closing mechanism including a plurality of door latches.

According to one aspect of the present disclosure, there is provided an automobile door opening and closing mechanism for an automobile with a canopy door. The automobile door opening and closing mechanism as defined in claim 1 comprises a plurality of door operation units disposed at different positions of a body of the automobile; a plurality of door latches disposed at different positions of the body and operable for hooking and unhooking a plurality of strikers of the canopy door; and a remote control mechanism mechanically connected to the plurality of door operation units and the plurality of door latches. In response to an operation input from one of the plurality of door operation units, the remote control mechanism transmits an operation output for operating all of the door latches.

According to another aspect of the present disclosure, there is provided an automobile with a canopy door comprising the automobile door opening and closing mechanism according to the invention, wherein the door is a canopy door located above the body. The front of the canopy door is attached to the body via a rotary mechanism, and the canopy door is configured to vertically rotate about the rotary mechanism.

In an embodiment of the automobile door opening and closing mechanism, the door operation units and the door latches are disposed on right and left sides of the canopy door.

In the embodiment of the automobile door opening and closing mechanism of claim 1, each of the door operation units includes a door handle. The automobile door opening and closing mechanism further comprises a plurality of handle cables disposed between the plurality of door handles and the remote control mechanism; and a plurality of latch cables disposed between the remote control mechanism and the plurality of door latches. The remote control mechanism transmits to the plurality of latch cables an operation input received through one of the plurality of handle cables. All of the door latches unhook the plurality of strikers of the canopy door in response to an operation output transmitted through the latch cable disposed between the remote control mechanism and the door latch.

In an embodiment of the automobile door opening and closing mechanism, at least one of the plurality of door operation units includes a key operation mechanism. The automobile door opening and closing mechanism further comprises a key cable disposed between the key operation mechanism and the remote control mechanism. The remote control mechanism comprises a locking mechanism that comes into a locked state or an unlocked state in response to an operation input transmitted from the key operation mechanism via the key cable. The locked state is a state in which transmission of a force by the latch cables is inhibited, and the unlocked state is a state in which transmission of a force by the latch cables is allowed.

In an embodiment of the automobile door opening and closing mechanism, two or more of the plurality of door operation units or all of the plurality of door operation units include the key operation mechanism. The remote control mechanism comes into the locked state in response to an operation input transmitted from one of the plurality of key operation mechanisms, and comes into the unlocked state in response to an operation input transmitted from one of the plurality of key operation mechanisms.

The present disclosure enables a simplified structure of a door opening and closing mechanism including a plurality of door latches.

### BRIEF DESCRIPTION OF DRAWINGS

Embodiments of the present disclosure will be described based on the following figures, wherein:
FIG. 1 is a perspective view of a canopy door automobile;
FIG. 2 is a perspective view of a canopy door automobile with a canopy door being open;
FIG. 3 illustrates functional blocks of an automobile door opening and closing mechanism;
FIG. 4 schematically illustrates a door opening mechanism with no door handle being operated;
FIG. 5 schematically illustrates a door opening mechanism with a door handle being operated;
FIG. 6 schematically illustrates a door opening mechanism and a locking mechanism;
FIG. 7 schematically illustrates a key operation mechanism that is in a neutral state;
FIG. 8 schematically illustrates the key operation mechanism that is in a locking operation state;
FIG. 9 schematically illustrates the key operation mechanism that is in an unlocking operation state;
FIG. 10 illustrates the locking mechanism that is in an unlocked state; and
FIG. 11 illustrates the locking mechanism that is in a locked state.

### DESCRIPTION OF EMBODIMENTS

An automobile door opening and closing mechanism according to an embodiment of the present disclosure will be described below with reference to the drawings. In the following description, the terms up/down, right/left, and front/back represent directions as viewed from a passenger in an automobile. The same components illustrated in two or more drawings are denoted by the same reference numerals, and the same description is not repeated.

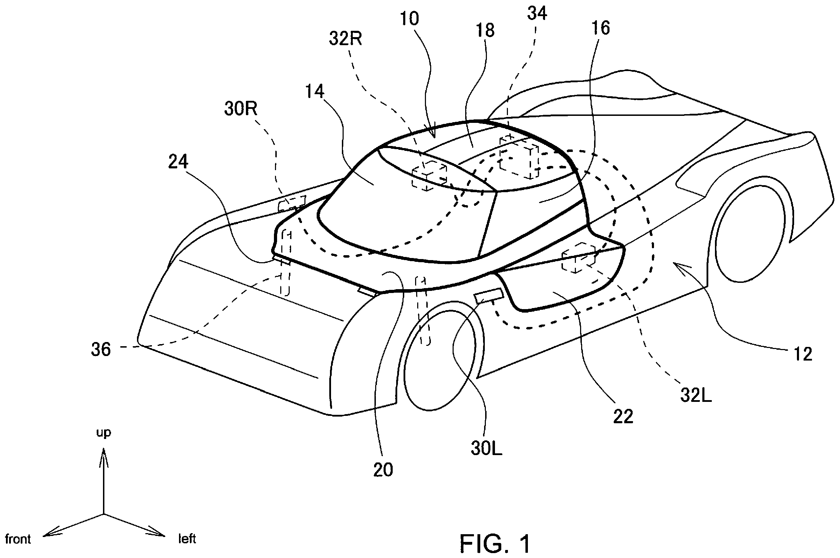

FIG. 1 illustrates a perspective view of a canopy door automobile according to an embodiment of the present disclosure. The canopy door automobile includes a canopy door 10 that is attached to a body 12, the canopy door 10 covering above the cabin. The body 12 has a shape that differs from the shape of a conventional body that has doors on the right and left sides, in that a front upper portion of the cabin is cut out, and the canopy door 10 fits in the cutout of the body 12 so as to be able to open and close.

The canopy door 10 includes a front window 14, right and left side windows 16, a ceiling 18, and a skirt 20. The front window 14 faces toward the front view. The side windows 16 face toward the right and left views, each extending from a corresponding one of the left side edge and the right side edge of the front window 14 toward the rear. The ceiling 18 covers above an area surrounded by the front window 14 and the right and left side windows 16. The skirt 20 spreads out from the lower ends of the front window 14 and the right and left side windows 16 toward the outside of the automobile. The skirt 20 has projections 22 on the right and left sides. The left side projection 22 spreads out toward the left and then bends down, and the right side projection 22 spreads out toward the right and then bends down. A left end and a right end of the front edge of the skirt 20 are attached to the body 12 via hinges 24 serving as the rotary mechanism. The canopy door 10 opens and closes as it vertically rotates about the right and left hinges 24.

A left side surface of the body 12 has a left door operation unit 30L, and a right side surface of the body 12 has a right door operation unit 30R. The left door operation unit 30L and the right door operation unit 30R are respectively located toward the front of the left side projection 22 and toward the front of the right side projection 22. Each of the left door operation unit 30L and the right door operation unit 30R includes a door handle and a key cylinder.

A left door latch 32L and a right door latch 32R are respectively provided on the left side and on the right side of the body 12. The left door latch 32L is disposed at a position that is opposed to the underside of the left side projection 22. The right door latch 32R is disposed at a position that is opposed to the underside of the right side projection 22. The left door latch 32L and the right door latch 32R are operable for opening and closing the canopy door 10.

Each of the underside of the left side projection 22 and the underside of the right side projection 22 has a striker that projects in the form of a loop. When the canopy door 10 is closed, the left side striker and the right side striker are respectively hooked on to by the left door latch 32L and the right door latch 32R to hold the canopy door 10 closed.

A remote control mechanism 34 is provided on the back side of the rear wall of the cabin; the remote control mechanism 34 operates the left door latch 32L and the right door latch 32R in response to an operation of the left door operation unit 30L or the right door operation unit 30R. The left door operation unit 30L and the right door operation unit 30R are mechanically connected to the remote control mechanism 34 by means of cables, each of which includes a pull line (inner cable) that is inserted through a flexible tube. Similarly, the left door latch 32L and the right door latch 32R are also mechanically connected to the remote control mechanism 34 by means of cables.

In response to an operation of a door handle in one of the left door operation unit 30L and the right door operation unit 30R, the left door latch 32L unhooks the left side striker, and the right door latch 32R unhooks the right side striker.

A telescopic cylinder 36 is provided between the left side of the front of the canopy door 10 and the body 12, and a telescopic cylinder 36 is provided between the right side of the front of the canopy door 10 and the body 12. Each of the telescopic cylinders 36 includes a spring and extends as the right and left strikers of the canopy door 10 are unhooked from the left door latch 32L and the right door latch 32R, so as to bias the canopy door 10 upward. As such, the canopy door 10 rotates about the right and left hinges 24 upward and is made open.

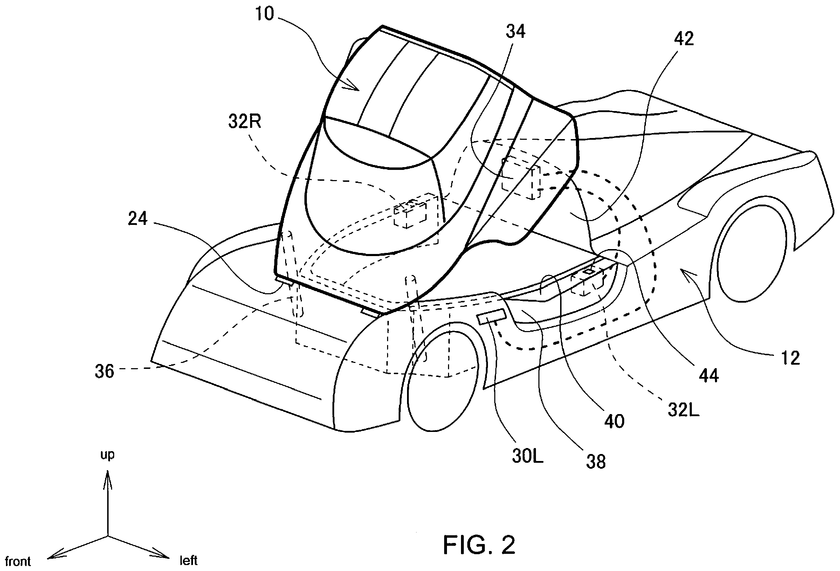

FIG. 2 illustrates a canopy door automobile with the canopy door 10 being open. A recess 38 is provided on each of the right and left sides of the body 12. The recess 38 includes a step 40 on which a passenger sits for keeping balance when the passenger is entering or exiting the automobile. The left door latch 32L is provided inside the body at a portion toward the rear of the left side step 40. A wall of the body 12 that covers the left door latch 32L has a latch hole 44 into which the striker is inserted. Similarly, the right door latch 32R is provided inside the body at a portion toward the rear of the right side step 40, and a wall of the body 12 that covers the right door latch 32R has a latch hole 44. To close the canopy door 10, the left side striker goes through the left side latch hole 44 and is hooked on to by the left door latch 32L, and the right side striker goes through the right side latch hole 44 and is hooked on to by the right door latch 32R.

The telescopic cylinders 36 retract as the canopy door 10 is pressed down by a passenger standing outside the vehicle, and the canopy door 10 rotates downward about the right and left hinges 24. As such, the right and left strikers are hooked on to by the left door latch 32L and the right door latch 32R, and the canopy door 10 is closed.

As a passenger inserts a key into a key cylinder of one of the left door operation unit 30L and the right door operation unit 30R of a canopy door automobile and rotates the key, the left door latch 32L and the right door latch 32R are locked or unlocked via the cables.

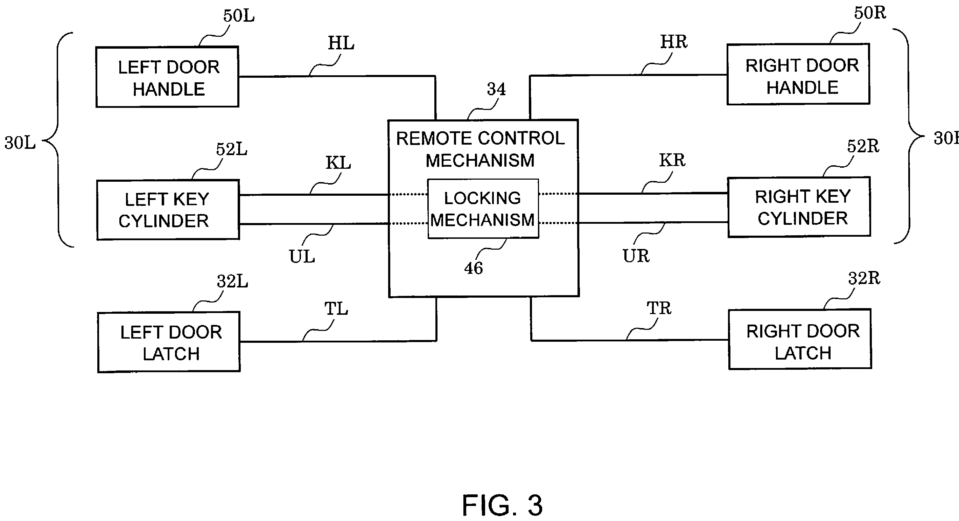

FIG. 3 illustrates functional blocks of an automobile door opening and closing mechanism. The automobile door opening and closing mechanism includes the left door operation unit 30L, the right door operation unit 30R, the left door latch 32L, the right door latch 32R, and the remote control mechanism 34. The left door operation unit 30L includes a left door handle 50L and a left key cylinder 52L, and the right door operation unit 30R includes a right door handle 50R and a right key cylinder 52R.

The automobile door opening and closing mechanism includes cables, each of which mechanically connects a corresponding one of the left door operation unit 30L, the right door operation unit 30R, the left door latch 32L, and the right door latch 32R to the remote control mechanism 34, as will be described below. The remote control mechanism 34 transmits a force for operating the door latches from one of the left door handle 50L and the right door handle 50R to the door latches via the cables. Each of the cables may include a pull line that is inserted through a flexible tube that is formed from, for example, a plastic resin. The pull line may be made of metal or another material such as a plastic resin or natural fiber that is formed in a linear shape. As one end of the pull line is pulled, the cable transmits to the other end a force created by the pulling.

The left door handle 50L is connected to the remote control mechanism 34 by a left handle cable HL, and the right door handle 50R is connected to the remote control mechanism 34 by a right handle cable HR. The left door latch 32L is connected to the remote control mechanism 34 by a left latch cable TL, and the right door latch 32R is connected to the remote control mechanism 34 by a right latch cable TR.

The remote control mechanism 34 includes a locking mechanism 46 for locking or unlocking the left door latch 32L and the right door latch 32R. The left key cylinder 52L is connected to the locking mechanism 46 by a left locking cable KL and a left unlocking cable UL (key cables). The right key cylinder 52R is connected to the locking mechanism 46 by a right locking cable KR and a right unlocking cable UR (key cables). The left locking cable KL and the right locking cable KR are configured to lock the left door latch 32L and the right door latch 32R, and the left unlocking cable UL and the right unlocking cable UR are configured to unlock the left door latch 32L and the right door latch 32R.

In some embodiments, one of the left key cylinder 52L and the right key cylinder 52R may be eliminated. For example, when the driver's seat is located on the right side of the cabin, the right key cylinder 52R, the right locking cable KR, and the right unlocking cable UR are provided, and the left key cylinder 52L, the left locking cable KL, and the left unlocking cable UL may be eliminated.

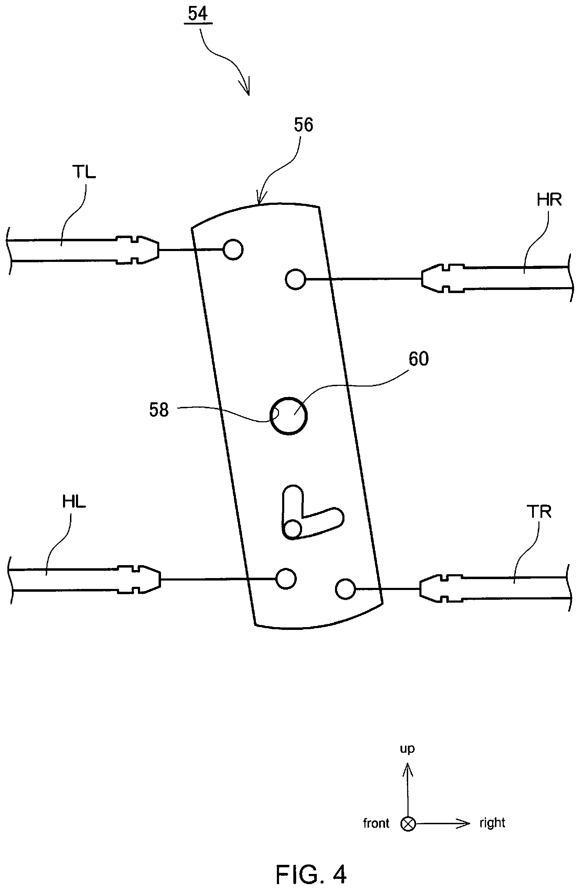

FIG. 4 schematically illustrates a door opening mechanism 54 that is included in the remote control mechanism 34 and that is associated with the operation of door handles and door latches. Up/down, right/left, and front/back arrows in FIG. 4 are to facilitate illustration and are not to limit the orientation of the door opening mechanism 54 when it is attached to an automobile.

The door opening mechanism 54 includes a rotation lever 56 and a center support column 60. The center support column 60 is fixed to a housing that houses the door opening mechanism 54, and extends in the front/back direction in FIG. 4. The rotation lever 56 is a generally rectangular flat component, and has a rotation hole 58 at the center. The center support column 60 passes through the rotation hole 58. The rotation lever 56 can rotate freely about the center support column 60, except when, as will be described below, the movement is inhibited by the locking mechanism 46.

The left handle cable HL is connected to a lower end portion of the rotation lever 56 and extends toward the left. More specifically, the tip of the pull line of the left handle cable HL is fixed to the lower end portion of the rotation lever 56, and the pull line extends toward the left and into the tube of the left handle cable HL. Similarly as for the left handle cable HL, the right handle cable HR is connected to an upper end portion of the rotation lever 56 and extends toward the right. The point at which the left handle cable HL and the rotation lever 56 are connected together and the point at which the right handle cable HR and the rotation lever 56 are connected together are rotationally symmetrically located at 180° relative to each other.

The left latch cable TL is connected to the upper end portion of the rotation lever 56 and extends toward the left. More specifically, the tip of the pull line of the left latch cable TL is fixed to the upper end portion of the rotation lever 56, and the pull line extends toward the left and into the tube of the left latch cable TL. Similarly as for the left latch cable TL, the right latch cable TR is connected to the lower end portion of the rotation lever 56 and extends toward the right. The point at which the left latch cable TL and the rotation lever 56 are connected together and the point at which the right latch cable TR and the rotation lever 56 are connected together are rotationally symmetrically located at 180° relative to each other.

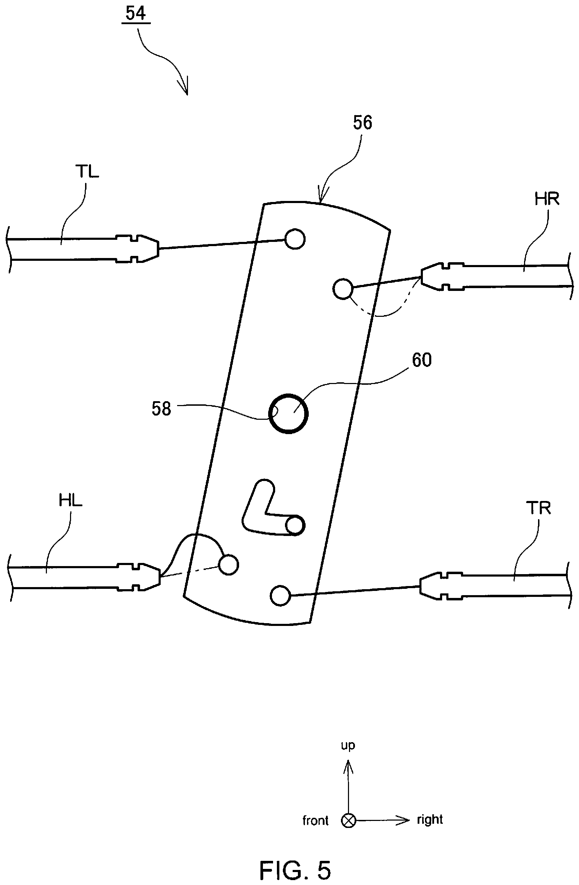

FIG. 4 illustrates a state in which both of the left door handle 50L and the right door handle 50R are unoperated. In this state, an operation of the right door handle 50R causes the pull line of the right handle cable HR to be pulled by the right door handle 50R. The pull line pulls the upper end portion of the rotation lever 56 toward the right. As such, as illustrated in FIG. 5, the rotation lever 56 rotates clockwise to pull the pull line of the left latch cable TL toward the right and to pull the pull line of the right latch cable TR toward the left. The left door latch 32L and the right door latch 32R unhook the right and left strikers, and the canopy door is opened. At this time, while the space between the tip of the tube of the left handle cable HL and the lower end portion of the rotation lever 56 is reduced, as the pull line does not go into the tube of the left handle cable HL, the pull line is curved loosely between the tip of the tube of the left handle cable HL and the lower end portion of the rotation lever 56.

Similarly, an operation of the left door handle 50L causes the pull line of the left handle cable HL to be pulled by the left door handle 50L. The pull line pulls the lower end portion of the rotation lever 56 toward the left. As such, the rotation lever 56 rotates clockwise, and the canopy door is opened by movements similar to those performed upon an operation of the right door handle 50R. At this time, while the space between the tip of the tube of the right handle cable HR and the upper end portion of the rotation lever 56 is reduced, as the pull line does not go into the tube of the right handle cable HR, the pull line is curved loosely between the tip of the tube of the right handle cable HR and the upper end portion of the rotation lever 56, as illustrated by a chain double-dashed line.

It should be noted that the rotation lever 56 may have a knob that can be operated inside the cabin. In this case, an operation of the knob by a passenger inside the cabin causes the rotation lever 56 to rotate, and, as the left door latch 32L and the right door latch 32R operate, the canopy door is opened.

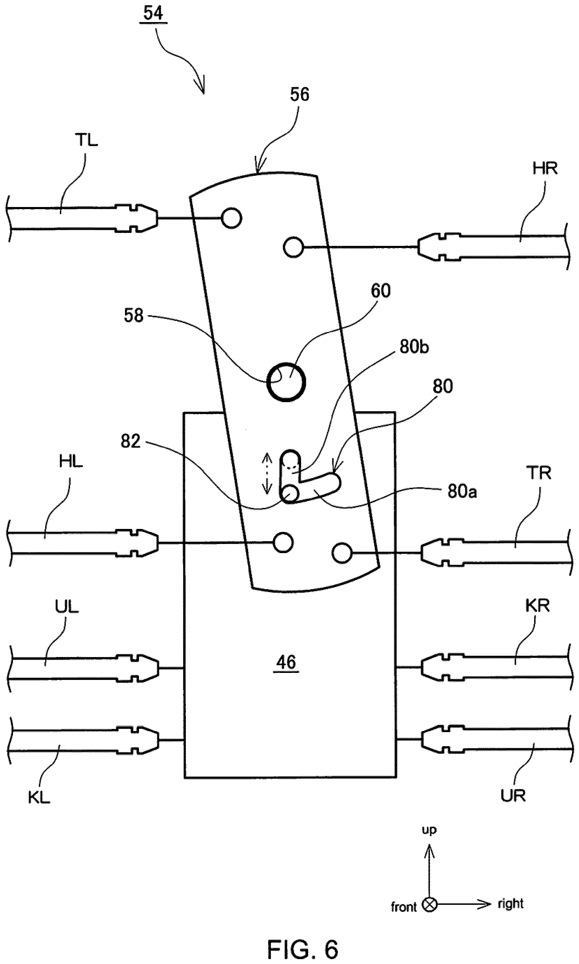

FIG. 6 schematically illustrates not only the door opening mechanism 54 but also the locking mechanism 46. A generally L-shaped lock groove 80 is provided below the rotation hole 58 of the rotation lever 56. A circumferential groove 80a of the lock groove 80 that extends in a lateral direction forms an arc about the center of the rotation lever 56. A radial groove 80b of the lock groove 80 that extends in a vertical direction extends in the longitudinal direction of the rotation lever 56.

A lock pin 82 that extends in the front/back direction is inserted in the lock groove 80. In a state in which the rotation lever 56 has rotated completely counterclockwise with both of the left door handle 50L and the right door handle 50R being unoperated, the lock pin 82 can move freely in the radial groove 80b of the lock groove 80.

When the lock pin 82 is located at the lower end of the radial groove 80b, as the circumferential groove 80a does not interfere with the lock pin 82, the rotation lever 56 can rotate freely. In this state, transmission of a force by the left latch cable TL and the right latch cable TR is allowed, and the left door latch 32L and the right door latch 32R are in an unlocked state.

On the other hand, when the lock pin 82 is located at the upper end of the radial groove 80b, as the right and left edges of the radial groove 80b interfere with the lock pin 82, rotation of the rotation lever 56 is inhibited. In this state, transmission of a force by the left latch cable TL and the right latch cable TR is inhibited, and the left door latch 32L and the right door latch 32R are held in a locked state.

With a structure that will be described below, the left key cylinder 52L and the right key cylinder 52R operate as follows: as a passenger inserts a key into the left key cylinder 52L and rotates the key in a locking direction, the left key cylinder 52L pulls the pull line of the left locking cable KL. Alternatively, as a passenger inserts a key into the right key cylinder 52R and rotates the key in a locking direction, the right key cylinder 52R pulls the pull line of the right locking cable KR.

As the pull line of the left locking cable KL is pulled, or as the pull line of the right locking cable KR is pulled, the locking mechanism 46 moves the lock pin 82 from the lower end to the upper end of the radial groove 80b and holds it at the upper end of the radial groove 80b. Referring to FIG. 6, the lock pin 82 that is held at the upper end of the radial groove 80b is illustrated by a chain double-dashed line. As such, the rotation lever 56 comes into a state in which its rotation is inhibited by the lock pin 82, and the left door latch 32L and the right door latch 32R are locked.

On the other hand, as a passenger inserts a key into the left key cylinder 52L and rotates the key in an unlocking direction, the left key cylinder 52L pulls the pull line of the left unlocking cable UL. Alternatively, as a passenger inserts a key into the right key cylinder 52R and rotates the key in an unlocking direction, the right key cylinder 52R pulls the pull line of the right unlocking cable UR.

As the pull line of the left unlocking cable UL is pulled, or as the pull line of the right unlocking cable UR is pulled, the locking mechanism 46 moves the lock pin 82 from the upper end to the lower end of the radial groove 80b and holds it at the lower end of the radial groove 80b. As such, the rotation lever 56 comes into a state in which it can rotate freely, and the left door latch 32L and the right door latch 32R are unlocked. A specific structure and operation of the locking mechanism 46 will be described below.

In the automobile door opening and closing mechanism according to the illustrated embodiment, an operation input produced in response to an operation of a door handle is transmitted from one of the left door handle 50L and the right door handle 50R via a handle cable to the remote control mechanism 34. Further, an operation output is transmitted from the remote control mechanism 34 via a latch cable to the left door latch 32L and the right door latch 32R. Therefore, the left door handle 50L and the right door handle 50R share the same mechanism from the remote control mechanism 34 to the left door latch 32L and the right door latch 32R. As such, the automobile door opening and closing mechanism has a simplified structure.

Additionally, an operation input produced in response to a locking operation or an unlocking operation is transmitted from one of the left key cylinder 52L and the right key cylinder 52R via a key cable to the remote control mechanism 34. In response to this operation input, the locking mechanism 46 comes into a locked state or an unlocked state, and the left door latch 32L and the right door latch 32R are locked or unlocked. Therefore, the left key cylinder 52L and the right key cylinder 52R share the same locking mechanism 46. Further, the left door latch 32L and the right door latch 32R are locked or unlocked by the locking mechanism 46 that is located upstream in the path through which a force is transmitted. This configuration eliminates the need to provide a locking and unlocking mechanism in the structure from the remote control mechanism 34 to the left door latch 32L and the right door latch 32R. As such, the automobile door opening and closing mechanism has a simplified structure.

Further, as the left door latch 32L and the right door latch 32R are disposed in the body 12 rather than in the canopy door 10, the canopy door 10 achieves a reduction in weight, and the canopy door 10 becomes easier to operate.

The above-described embodiment employs cables each including a pull line that is inserted through a flexible tube. In some embodiments, the pull line of the cable is not covered by the tube throughout all segments of the pull line; in other words, the tube of the cable may include a segment where the pull line is exposed. Alternatively, there may be used a cable including a pull line that is inserted through a plurality of annular components that are disposed at predetermined intervals.

The above-described embodiment employs the left door operation unit 30L and the right door operation unit 30R that are disposed on the right and the left of the body 12 as an example of different positions of the body 12. A plurality of door operation units may be disposed at other positions; for example, at the rear and the front of the body 12. Also, the applicability of the automobile door opening and closing mechanism is not limited to canopy doors; that is, the automobile door opening and closing mechanism may be used for other types of doors. In such cases, a plurality of door latches may be disposed at positions that conform to the shape of the door. In some embodiments, a door handle and a key cylinder in one door operation unit are not formed integrally and may be disposed at separate positions of the body of the vehicle.

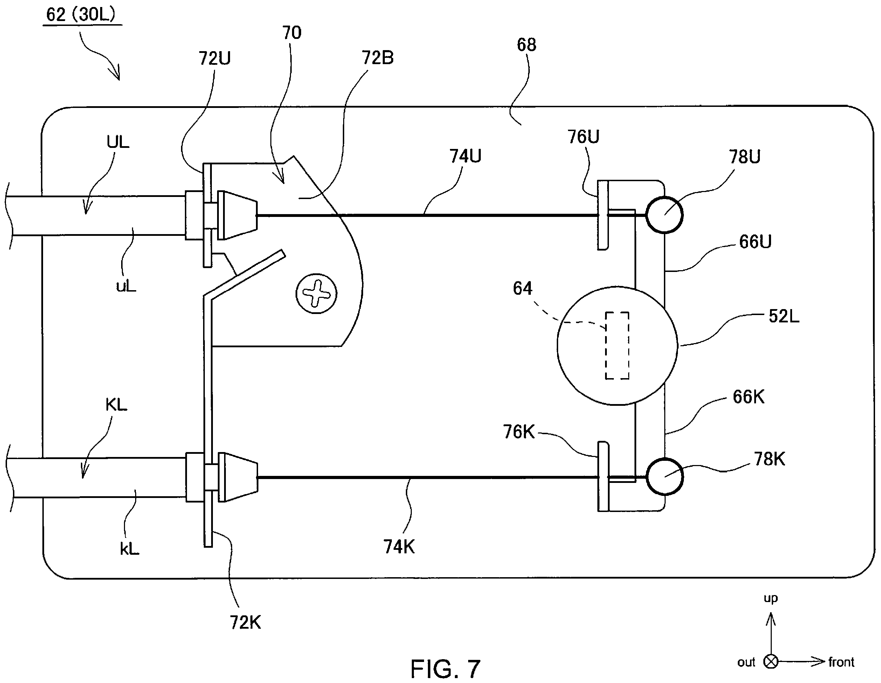

FIG. 7 schematically illustrates a key operation mechanism 62 that includes the left key cylinder 52L and its surrounding mechanism. The direction toward the drawing plane corresponds to the direction toward the outside of the automobile. The left direction in FIG. 7 corresponds to the direction toward the rear of the automobile, and the upward direction in FIG. 7 corresponds to the direction toward the top of the automobile.

FIG. 7 illustrates the key operation mechanism 62 that is in a neutral state in which the key operation mechanism 62 is in neither a locking operation state nor an unlocking operation state. The left key cylinder 52L has a generally cylindrical column shape. The left key cylinder 52L penetrates a housing 68 of the left door operation unit 30L with one end of the left key cylinder 52L exposed to the outside of the automobile and the other end of the left key cylinder 52L facing toward the interior of the automobile. The surface of the end of the left key cylinder 52L facing toward the outside of the automobile has a key hole 64 that extends therefrom toward the inside of the automobile. Insertion of a key that fits the key hole 64 into the key hole 64 enables the left key cylinder 52L to rotate freely along with the key. Although FIG. 7 illustrates the left key cylinder 52L having a generally cylindrical column shape, the left key cylinder 52L may have any column shape that extends from the inside of the automobile to the outside so as to rotate about the key that is inserted from the outside of the automobile.

The key operation mechanism 62 includes a locking lever 66K that extends downward from a side surface of the left key cylinder 52L and an unlocking lever 66U that extends upward from a side surface of the left key cylinder 52L. The locking lever 66K and the unlocking lever 66U may be formed integrally using the same material as the left key cylinder 52L. The locking lever 66K and the unlocking lever 66U are located on a straight line that passes vertically through the left key cylinder 52L, toward the front in relation to the central axis of the left key cylinder 52L.

In some embodiments, the locking lever 66K and the unlocking lever 66U may be located either on a straight line that passes vertically through the left key cylinder 52L, toward the rear in relation to the central axis of the left key cylinder 52L or on a straight line that vertically intersects the central axis of the left key cylinder 52L. In other embodiments, the locking lever 66K and the unlocking lever 66U are not located on a straight line and may extend from a side surface of the left key cylinder 52L in different directions from each other. A cable bracket 70 is fixed to the housing 68. The cable bracket 70 includes a base plate 72B that is screwed to an inner surface of the housing 68, and further includes an unlocking cable mounting wall 72U and a locking cable mounting wall 72K, both projecting from the base plate 72B toward the inside of the automobile. The locking cable mounting wall 72K extends diagonally downward toward the rear below the unlocking cable mounting wall 72U, and then further extends downward to protrude from the base plate 72B.

A tip portion of a left locking cable tube kL is fixed to the locking cable mounting wall 72K near its lower end. A tip portion of a left unlocking cable tube uL is fixed to the unlocking cable mounting wall 72U.

As such, when the left key cylinder 52L rotates counterclockwise as viewed in the figure (locking direction), the cable bracket 70 serving as a support component supports a locking pull line 74K via the left locking cable tube kL on the housing 68 at a position at which the locking lever 66K is at a greater distance away from the cable bracket 70. When the left key cylinder 52L rotates clockwise as viewed in the figure (unlocking direction), the cable bracket 70 supports an unlocking pull line 74U on the housing 68 at a position at which the unlocking lever 66U is at a greater distance away from the cable bracket 70.

The locking lever 66K extends downward from the left key cylinder 52L and then bends toward the rear, and the rear side of the central axis of the left key cylinder 52L is located above the rear end of the locking lever 66K. A pull line mounting wall 76K projects from the rear end of the locking lever 66K, and the locking pull line 74K that is exposed from the left locking cable tube kL passes through a pull line insertion hole in the pull line mounting wall 76K in a freely slidable manner. The tip of the locking pull line 74K has a locking pull line stopper 78K that has a spherical shape. The locking pull line stopper 78K may have any shape that is sized so as not to pass through the pull line insertion hole. When the left key cylinder 52L rotates counterclockwise as viewed in the figure, as the locking pull line stopper 78K is caught by the front surface of the pull line mounting wall 76K, the locking pull line 74K is pulled toward the front.

The unlocking lever 66U has a structure similar to that of the locking lever 66K. The unlocking pull line 74U that is exposed from the left unlocking cable tube uL passes through a pull line insertion hole in a pull line mounting wall 76U of the unlocking lever 66U in a freely slidable manner. The tip of the unlocking pull line 74U has an unlocking pull line stopper 78U that is similar to the locking pull line stopper 78K. When the left key cylinder 52L rotates clockwise as viewed in the figure, as the unlocking pull line stopper 78U is caught by the front surface of the pull line mounting wall 76U, the unlocking pull line 74U is pulled toward the front.

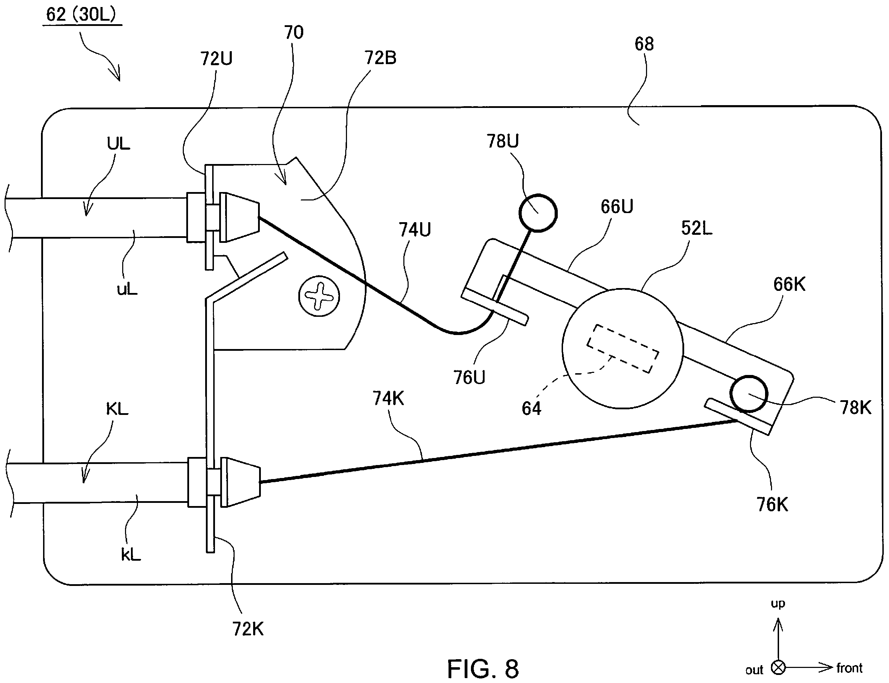

FIG. 8 illustrates the key operation mechanism 62 that is in a locking operation state. In the locking operation state, the left key cylinder 52L has been rotated counterclockwise as viewed in the figure. The locking pull line 74K is pulled toward the front by the locking lever 66K. In response to the pulling of the locking pull line 74K, the locking mechanism 46 locks the left door latch 32L and the right door latch 32R.

On the other hand, the unlocking pull line 74U extends into the pull line insertion hole in the pull line mounting wall 76U of the unlocking lever 66U and is curved loosely. This is because the length of the unlocking pull line 74U that is exposed from the left unlocking cable tube uL is longer than the distance between the tip of the left unlocking cable tube uL and the pull line mounting wall 76U.

As described above, the unlocking pull line 74U is freely slidable through the pull line insertion hole in the pull line mounting wall 76U of the unlocking lever 66U. This configuration prevents the unlocking pull line 74U from interfering with movement of the left key cylinder 52L.

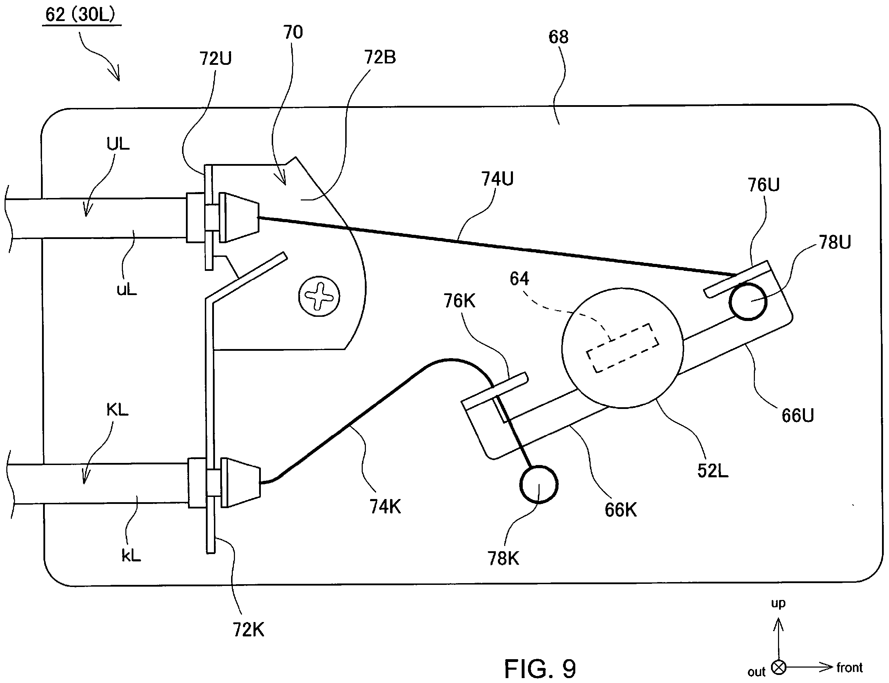

FIG. 9 illustrates the key operation mechanism 62 that is in an unlocking operation state. In the unlocking operation state, the left key cylinder 52L has been rotated clockwise as viewed in the figure. The unlocking pull line 74U is pulled toward the front by the unlocking lever 66U. In response to the pulling of the unlocking pull line 74U, the locking mechanism 46 unlocks the left door latch 32L and the right door latch 32R.

On the other hand, according to principles similar to those of the unlocking pull line 74U in the locking operation state, the locking pull line 74K extends into the pull line insertion hole in the pull line mounting wall 76K of the locking lever 66K and is curved loosely.

As described above, the locking pull line 74K is freely slidable through the pull line insertion hole in the pull line mounting wall 76K of the locking lever 66K. This configuration prevents the locking pull line 74K from interfering with movement of the left key cylinder 52L.

The left key cylinder 52L may be biased by means of a spring from the locking operation state to the neutral state as a rotational force applied to a key that is inserted into the key hole 64 is relaxed by the passenger when in the locking operation state. Similarly, the left key cylinder 52L may be biased by means of a spring from the unlocking operation state to the neutral state as a rotational force applied to a key that is inserted into the key hole 64 is relaxed by the passenger when in the unlocking operation state.

In the above-described embodiment, the locking lever 66K is disposed below the left key cylinder 52L, and the unlocking lever 66U is disposed above the left key cylinder 52L. In another embodiment, the locking lever 66K may be disposed above the left key cylinder 52L, and the unlocking lever 66U may be disposed below the left key cylinder 52L. The left locking pull line 74K and the left unlocking pull line 74U are then disposed in a vertically opposite arrangement, and the left key cylinder 52L is rotated in opposite directions when it is rotated in the locking direction and in the unlocking direction.

While the left side key operation mechanism 62 has been described above, the right side key operation mechanism may have a structure similar to that of the left side key operation mechanism 62.

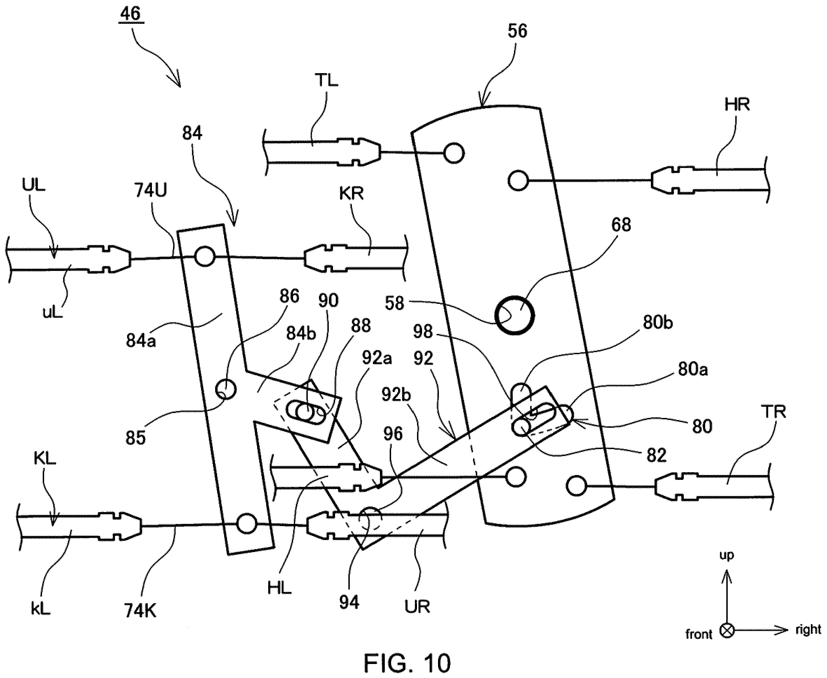

FIG. 10 illustrates an example of the locking mechanism 46. This figure illustrates the locking mechanism 46 that is in an unlocked state in which rotation of the rotation lever 56 is not inhibited. Up/down, right/left, and front/back arrows in FIG. 10 are to facilitate illustration and are not to limit the orientation of the locking mechanism 46 when it is attached to an automobile. The locking mechanism 46 includes a T-shaped lever 84, a T-shaped lever support column 86, an L-shaped lever 92, and an L-shaped lever support column 96.

The T-shaped lever 84 is a flat component that is shaped like the letter T, and includes a lever main body 84a that extends in a vertical direction and an arm 84b that projects from the lever main body 84a toward the right. The lever main body 84a has a rotation hole 85 at the center, and the T-shaped lever support column 86 that extends in the front/back direction passes through the rotation hole 85. The T-shaped lever support column 86 is fixed to a housing that houses the locking mechanism 46, and the T-shaped lever 84 can rotate freely about the T-shaped lever support column 86. The arm 84b has a lever engagement hole 88 composed of a slit that extends in the longitudinal direction of the arm 84b.

The locking pull line 74K of the left locking cable KL is connected to a lower end portion of the lever main body 84a. Similarly as for the lower end portion of the lever main body 84a, the locking pull line 74K of the right locking cable KR is connected to an upper end portion of the lever main body 84a.

It should be noted that, while, in FIG. 10, the pull lines between each cable tube and the lever main body 84a are represented by straight lines just for ease of illustration, the pull lines between each cable tube and the lever main body 84a may be curved loosely depending on the degree to which each of the pull lines is pulled.

The unlocking pull line 74U of the right unlocking cable UR is connected to the lower end portion of the lever main body 84a. The unlocking pull line 74U of the left unlocking cable UL is connected to the upper end portion of the lever main body 84a.

The L-shaped lever 92 is a flat component that is shaped like the letter L, and an input point (point of effort) side segment 92a located on the left side and an output point (point of load) side segment 92b located on the right side form the letter L. A portion where the input point side segment 92a and the output point side segment 92b are joined together has a rotation hole 94, and the L-shaped lever support column 96 that extends in the front/back direction passes through the rotation hole 94. The L-shaped lever support column 96 is fixed to a housing that houses the locking mechanism 46, and the L-shaped lever 92 can rotate freely about the L-shaped lever support column 96.

An engagement pin 90 projects from a tip portion of the input point side segment 92a. The engagement pin 90 passes through the lever engagement hole 88 formed in the arm 84b of the T-shaped lever 84. The engagement pin 90 is freely slidable in the longitudinal direction of the lever engagement hole 88. A tip portion of the output point side segment 92b has a lock pin engagement hole 98 composed of a slit that extends in the longitudinal direction of the output point side segment 92b. The lock pin 82 that passes through the lock groove 80 in the rotation lever 56 and extends toward the rear passes through the lock pin engagement hole 98. The lock pin 82 is freely slidable in the lock pin engagement hole 98.

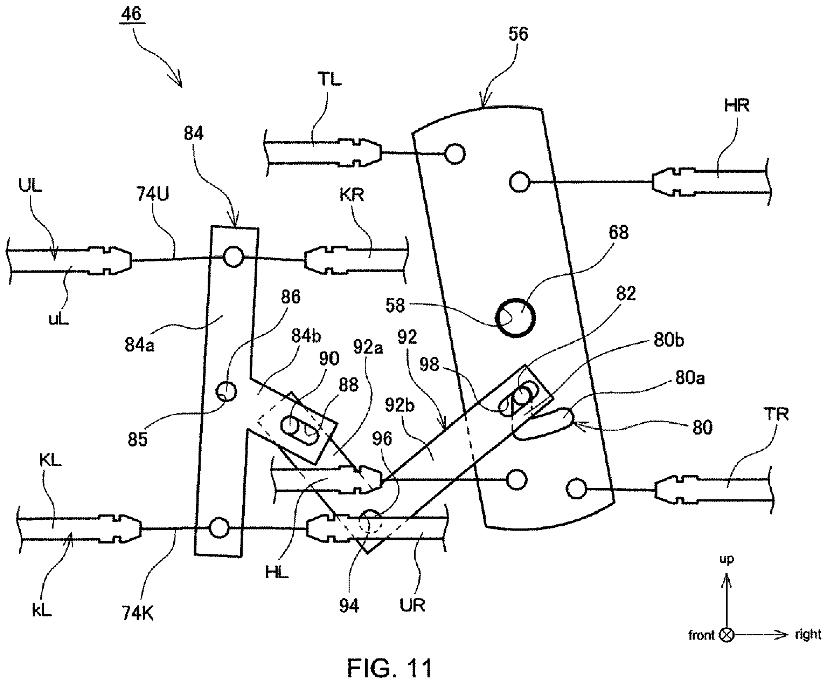

A locking operation of the locking mechanism 46 will be described below. To lock the door, the locking pull line 74K of either the left locking cable KL or the right locking cable KR is pulled, and in response to that, the T-shaped lever 84 rotates clockwise about the T-shaped lever support column 86. As such, the arm 84b of the T-shaped lever 84 moves downward, and a downward force acts upon the engagement pin 90 while it is sliding along the lever engagement hole 88 toward the lever main body 84a. The force acting upon the engagement pin 90 applies a counterclockwise rotational force to the L-shaped lever 92, and the L-shaped lever 92 rotates counterclockwise about the L-shaped lever support column 96. As such, the output point side segment 92b of the L-shaped lever 92 moves upward, and an upward force acts upon the lock pin 82 while it is sliding along the lock pin engagement hole 98 toward the tip of the output point side segment 92b. As illustrated in FIG. 11, the lock pin 82 moves to the upper end of the radial groove 80b of the lock groove 80 in the rotation lever 56, and the rotation lever 56 comes into the locked state in which the rotation is inhibited.

An unlocking operation of the locking mechanism 46 will be described below. To unlock the door, the unlocking pull line 74U of either the left unlocking cable UL or the right unlocking cable UR is pulled, and in response to that, the T-shaped lever 84 rotates counterclockwise about the T-shaped lever support column 86. As such, the arm 84b of the T-shaped lever 84 moves upward, and an upward force acts upon the engagement pin 90 while it is sliding along the lever engagement hole 88 toward the tip of the arm 84b. The force acting upon the engagement pin 90 applies a clockwise rotational force to the L-shaped lever 92, and the L-shaped lever 92 rotates clockwise about the L-shaped lever support column 96. As such, the output point side segment 92b of the L-shaped lever 92 moves downward, and a downward force acts upon the lock pin 82 while it is sliding along the lock pin engagement hole 98 toward the rotation hole 94. As illustrated in FIG. 10, the lock pin 82 moves to the lower end of the radial groove 80b of the lock groove 80 in the rotation lever 56, and the rotation lever 56 comes into the unlocked state in which the rotation is not inhibited.

The locking mechanism 46 comes into the locked state in response to the locking pull line 74K of either the left locking cable KL or the right locking cable KR being pulled from the key cylinder side and comes into the unlocked state in response to the unlocking pull line 74U of either the left unlocking cable UL or the right unlocking cable UR being pulled from the key cylinder side. The key operation mechanism 62 converts a locking direction rotational force that is applied to the key cylinder into a force that pulls the locking pull line 74K and converts an unlocking direction rotational force that is applied to the key cylinder into a force that pulls the unlocking pull line 74U. Therefore, as two locking and unlocking cables share a single key cylinder, the structure of the key operation mechanism 62 is simplified.

In the key operation mechanism 62, the key cylinder and the locking mechanism 46 are connected by cables. Therefore, the mechanism between the key cylinder and the locking mechanism 46 is simple even if the distance between the locking mechanism 46 and the key cylinder is long or even if the locking mechanism 46 is disposed at a position in a complicated structure that is difficult to reach as viewed from the key cylinder.

The key operation mechanism according to the illustrated embodiment may be used not only for canopy doors but also for other types of doors. Specifically, the above-described key operation mechanism may be used for a locking mechanism that comes into the locked state when a pull line of a cable that is disposed for locking is pulled, and that comes into the unlocked state when a pull line of a cable that is disposed for unlocking is pulled.

## Claims

1. An automobile door opening and closing mechanism for an automobile with a canopy door, comprising:
a plurality of door operation units (30R, 30L) configured to be disposed at different positions of a body (12) of the automobile ;
a plurality of door latches (32R, 32L) configured to be disposed at different positions of the body (12) and to be operable for hooking and unhooking a plurality of strikers of the canopy door (10); and
a remote control mechanism (34) mechanically connected to the plurality of door operation units (30R, 30L) and the plurality of door latches (32R, 32L),
wherein, in response to an operation input from one of the plurality of door operation units (30R, 30L), the remote control mechanism (34) transmits an operation output for operating all of the door latches (32R, 32L);
wherein each of the door operation units (30R, 30L) includes a door handle (50R, 50L),
wherein the automobile door opening and closing mechanism further comprises:
a plurality of handle cables (HR, HL) disposed between the plurality of door handles (50R, 50L) and the remote control mechanism (34); and
a plurality of latch cables (TR, TL) disposed between the remote control mechanism (34) and the plurality of door latches (32R, 32L),
wherein the remote control mechanism (34) transmits to the plurality of latch cables (TR, TL) an operation input received through one of the plurality of handle cables (HR, HL), and
wherein all of the door latches (32R, 32L) are configured to unhook the plurality of strikers of the canopy door (10) in response to an operation output transmitted through the latch cable (TR, TL) disposed between the remote control mechanism (34) and the door latch (32R, 32L).

2. The automobile door opening and closing mechanism according to claim 1,
wherein the door operation units (30R, 30L) and the door latches (32R, 32L) are configured to be disposed on right and left sides of the canopy door (10).

3. The automobile door opening and closing mechanism according to claim 1 or 2,
wherein at least one of the plurality of door operation units (30R, 30L) includes a key operation mechanism (62),
wherein the automobile door opening and closing mechanism further comprises a key cable (KR, KL, UR, UL) disposed between the key operation mechanism (62) and the remote control mechanism (34), and
wherein the remote control mechanism (34) comprises a locking mechanism (46) that comes into a locked state or an unlocked state in response to an operation input transmitted from the key operation mechanism (62) via the key cable (KR, KL, UR, UL),
the locked state being a state in which transmission of a force by the latch cables (TR, TL) is inhibited, and
the unlocked state being a state in which transmission of a force by the latch cables (TR, TL) is allowed.

4. The automobile door opening and closing mechanism according to claim 3,
wherein two or more of the plurality of door operation units (30R, 30L) or all of the plurality of door operation units (30R, 30L) include the key operation mechanism (62), and
wherein the remote control mechanism (34) comes into the locked state in response to an operation input transmitted from one of the plurality of key operation mechanisms (62), and comes into the unlocked state in response to an operation input transmitted from one of the plurality of key operation mechanisms (62).

5. The automobile door opening and closing mechanism according to any one of claims 1 to 4,
wherein the remote control mechanism (34) comprises a door opening mechanism (54), the door opening mechanism (54) including a center support column (60) and a rotation lever (56) configured to be rotatable around the center support column (60),
wherein the plurality of handle cables (HR, HL) are connected to the rotation lever (56) at positions rotationally symmetrically located at 180° relative to each other,
wherein the plurality latch cables (TR, TL) are connected to the rotation lever (56) at positions respectively facing the positions where the handle cables (HR, HL) are connected to the rotation lever (56) and rotationally symmetrically located at 180° relative to each other,
wherein the rotation lever (56) is configured to rotate around the center support column (60) in response to an operation input from one of the plurality of door operation units (30R, 30L) transmitted by one of the plurality of handle cables (HR, HL), so as to transmit the operation output, through the plurality of latch cables (32R, 32L).

6. The automobile door opening and closing mechanism according to claim 5,
wherein the rotation lever (56) includes a knob configured to be manually operated by an automobile passenger for opening the door (10).

7. An automobile with a canopy door (10) comprising the automobile door opening and closing mechanism according to any one of the preceding claims,
wherein the canopy door (10) is located above the body (12), the front of the canopy door (10) being attached to the body (12) via a rotary mechanism (24), the canopy door (10) being configured to vertically rotate about the rotary mechanism (24).

## Patentansprüche

1. Automobiltür-Öffnungs- und Schließmechanismus für ein Automobil mit einer Klappverdecktür, umfassend:
mehrere Türbetätigungseinheiten (30R, 30L), die dazu ausgestaltet sind, an unterschiedlichen Positionen einer Karosserie (12) des Automobils angeordnet zu werden,
mehrere Türschlösser (32R, 32L), die dazu ausgestaltet sind, an unterschiedlichen Positionen der Karosserie (12) angeordnet zu werden und dazu betätigbar zu sein, mehrere Schließbügel der Klappverdecktür (10) einzuhaken und auszuhaken, und
einen Fernsteuerungsmechanismus (34), der mechanisch mit den mehreren Türbetätigungseinheiten (30R, 30L) und den mehreren Türschlössern (32R, 32L) verbunden ist,
wobei in Ansprechen auf eine Betätigungseingabe von einer der mehreren Türbetätigungseinheiten (30R, 30L) der Fernsteuerungsmechanismus (34) eine Betätigungsausgabe zum Betätigen aller Türschlösser (32R, 32L) überträgt,
wobei jede der Türbetätigungseinheiten (30R, 30L) einen Türgriff (50R, 50L) beinhaltet,
wobei der Automobiltür-Öffnungs- und Schließmechanismus ferner umfasst:
mehrere Handgriffkabel (HR, HL), die zwischen den mehreren Türgriffen (50R, 50L) und dem Fernsteuerungsmechanismus (34) angeordnet sind, und
mehrere Schlosskabel (TR, TL), die zwischen dem Fernsteuerungsmechanismus (34) und den mehreren Türschlössern (32R, 32L) angeordnet sind,
wobei der Fernsteuerungsmechanismus (34) auf die mehreren Schlosskabel (TR, TL) eine Betätigungseingabe überträgt, die über eines der mehreren Handgriffkabel (HR, HL) empfangen wurde, und
wobei alle der Türschlösser (32R, 32L) dazu ausgestaltet sind, die mehreren Schließbügel der Klappverdecktür (10) in Ansprechen auf eine Betätigungsausgabe auszuhaken, die über das Schlosskabel (TR, TL), das zwischen dem Fernsteuerungsmechanismus (34) und dem Türschloss (32R, 32L) angeordnet ist, übertragen wird.

2. Automobiltür-Öffnungs- und Schließmechanismus nach Anspruch 1,
wobei die Türbetätigungseinheiten (30R, 30L) und die Türschlösser (32R, 32L) dazu ausgestaltet sind, auf der rechten und der linken Seite der Klappverdecktür (10) angeordnet zu werden.

3. Automobiltür-Öffnungs- und Schließmechanismus nach Anspruch 1 oder 2,
wobei mindestens eine der mehreren Türbetätigungseinheiten (30R, 30L) einen Schlüsselbetätigungsmechanismus (62) beinhaltet,
wobei der Automobiltür-Öffnungs- und Schließmechanismus ferner ein Schlüsselkabel (KR, KL, UR, UL) umfasst, das zwischen dem Schlüsselbetätigungsmechanismus (62) und dem Fernsteuerungsmechanismus (34) angeordnet ist, und
wobei der Fernsteuerungsmechanismus (34) einen Verriegelungsmechanismus (46) umfasst, der in Ansprechen auf eine Betätigungseingabe, die von dem Schlüsselbetätigungsmechanismus (62) kommend über das Schlüsselkabel (KR, KL, UR, UL) übertragen wird, in einen verriegelten Zustand oder einen entriegelten Zustand gelangt,
wobei der verriegelte Zustand ein Zustand ist, in welchem die Übertragung einer Kraft durch die Schlosskabel (TR, TL) verhindert wird, und
der entriegelte Zustand ein Zustand ist, in welchem die Übertragung einer Kraft durch die Schlosskabel (TR, TL) zugelassen wird.

4. Automobiltür-Öffnungs- und Schließmechanismus nach Anspruch 3,
wobei zwei oder mehr der mehreren Türbetätigungseinheiten (30R, 30L) oder alle der mehreren Türbetätigungseinheiten (30R, 30L) den Schlüsselbetätigungsmechanismus (62) beinhalten, und
wobei der Fernsteuerungsmechanismus (34) in Ansprechen auf eine Betätigungseingabe, die von einem der mehreren Schlüsselbetätigungsmechanismen (62) kommend übertragen wird, in den verriegelten Zustand gelangt, und in Ansprechen auf eine Betätigungseingabe, die von einem der mehreren Schlüsselbetätigungsmechanismen (62) kommend übertragen wird, in den entriegelten Zustand gelangt.

5. Automobiltür-Öffnungs- und Schließmechanismus nach einem der Ansprüche 1 bis 4,
wobei der Fernsteuerungsmechanismus (34) einen Türöffnungsmechanismus (54) umfasst, wobei der Türöffnungsmechanismus (54) eine Mitteltragsäule (60) und einen Drehhebel (56) beinhaltet, der dazu ausgestaltet ist, um die Mitteltragsäule (60) herum drehbar zu sein,
wobei die mehreren Handgriffkabel (HR, HL) mit dem Drehhebel (56) an Positionen verbunden sind, die rotationssymmetrisch 180° relativ zueinander gelegen sind,
wobei die mehreren Schlosskabel (TR, TL) mit dem Drehhebel (56) an Positionen verbunden sind, die jeweils den Positionen zugewandt sind, wo die Handgriffkabel (HR, HL) mit dem Drehhebel (56) verbunden sind, und die rotationssymmetrisch 180° relativ zueinander gelegen sind,
wobei der Drehhebel (56) dazu ausgestaltet ist, sich um die Mitteltragsäule (60) herum in Ansprechen auf eine Betätigungseingabe von einer der mehreren Türbetätigungseinheiten (30R, 30L), die durch eines der mehreren Handgriffkabel (HR, HL) übertragen wird, zu drehen, um die Betätigungsausgabe durch die mehreren Schlosskabel (32R, 32L) zu übertragen.

6. Automobiltür-Öffnungs- und Schließmechanismus nach Anspruch 5,
wobei der Drehhebel (56) einen Knopf beinhaltet, der dazu ausgestaltet ist, von einem Passagier des Automobils zum Öffnen der Tür (10) manuell betätigt zu werden.

7. Automobil mit einer Klappverdecktür (10), umfassend den Automobiltür-Öffnungs- und Schließmechanismus nach einem der vorhergehenden Ansprüche,
wobei die Klappverdecktür (10) über der Karosserie (12) gelegen ist, die Vorderseite der Klappverdecktür (10) an der Karosserie (12) über einen Drehmechanismus (24) angebracht ist, und die Klappverdecktür (10) dazu ausgestaltet ist, sich vertikal um den Drehmechanismus (24) zu drehen.

## Revendications

1. Mécanisme d'ouverture et de fermeture de porte d'automobile avec une porte de toit, comprenant :
une pluralité d'unités d'actionnement de porte (30R, 30L) configurées pour être disposées dans différentes positions d'une carrosserie (12) de l'automobile ;
une pluralité de verrous de porte (32R, 32L) configurés pour être disposés dans différentes positions de la carrosserie (12) et pour pouvoir fonctionner pour accrocher et décrocher une pluralité de gâches de la porte de toit (10) ; et
un mécanisme de télécommande (34) mécaniquement relié à la pluralité d'unités d'actionnement de porte (30R, 30L) et à la pluralité de verrous de porte (32R, 32L),
dans lequel, en réponse à une entrée d'actionnement provenant d'une unité de la pluralité d'unités d'actionnement de porte (30R, 30L), le mécanisme de télécommande (34) transmet une sortie d'actionnement pour actionner tous les verrous de porte (32R, 32L) ;
dans lequel chacune des unités d'actionnement de porte (30R, 30L) comprend une poignée de porte (50R, 50L),
dans lequel le mécanisme d'ouverture et de fermeture de porte d'automobile comprend en outre :
une pluralité de câbles de poignée (HR, HL) disposés entre la pluralité de poignées de porte (50R, 50L) et le mécanisme de télécommande (34) ; et
une pluralité de câbles de verrou (TR, TL) disposés entre le mécanisme de télécommande (34) et la pluralité de verrous de porte (32R, 32L),
dans lequel le mécanisme de télécommande (34) transmet à la pluralité de câbles de verrou (TR, TL) une entrée d'actionnement reçue par l'intermédiaire d'un câble de la pluralité de câbles de poignée (HR, HL), et
dans lequel tous les verrous de porte (32R, 32L) sont configurés pour décrocher la pluralité de gâches de la porte de toit (10) en réponse à une sortie d'actionnement transmise par l'intermédiaire du câble de verrou (TR, TL) disposé entre le mécanisme de télécommande (34) et le verrou de porte (32R, 32L).

2. Mécanisme d'ouverture et de fermeture de porte d'automobile selon la revendication 1,
dans lequel les unités d'actionnement de porte (30R, 30L) et les verrous de porte (32R, 32L) sont configurés pour être disposés sur des côtés droit et gauche de la porte de toit (10).

3. Mécanisme d'ouverture et de fermeture de porte d'automobile selon la revendication 1 ou 2,
dans lequel au moins une unité de la pluralité d'unités d'actionnement de porte (30R, 30L) comprend un mécanisme d'actionnement à clé (62),
dans lequel le mécanisme d'ouverture et de fermeture de porte d'automobile comprend en outre un câble de clé (KR, KL, UR, UL) disposé entre le mécanisme d'actionnement à clé (62) et le mécanisme de télécommande (34), et
dans lequel le mécanisme de télécommande (34) comprend un mécanisme de verrouillage (46) qui vient dans un état bloqué ou un état débloqué en réponse à une entrée d'actionnement transmise depuis le mécanisme d'actionnement à clé (62) par l'intermédiaire du câble de clé (KR, KL, UR, UL),
l'état bloqué étant un état dans lequel une transmission d'une force par les câbles de verrou (TR, TL) est empêchée, et
l'état débloqué étant un état dans lequel une transmission d'une force par les câbles de verrou (TR, TL) est permise.

4. Mécanisme d'ouverture et de fermeture de porte d'automobile selon la revendication 3,
dans lequel deux unités ou plus de la pluralité d'unités d'actionnement de porte (30R, 30L) ou toutes les unités de la pluralité d'unités d'actionnement de porte (30R, 30L) comprennent le mécanisme d'actionnement à clé (62), et
dans lequel le mécanisme de télécommande (34) vient dans l'état bloqué en réponse à une entrée d'actionnement transmise depuis un mécanisme de la pluralité de mécanismes d'actionnement à clé (62), et vient dans l'état débloqué en réponse à une entrée d'actionnement transmise depuis un mécanisme de la pluralité de mécanismes d'actionnement à clé (62).

5. Mécanisme d'ouverture et de fermeture de porte d'automobile selon l'une quelconque des revendications 1 à 4,
dans lequel le mécanisme de télécommande (34) comprend un mécanisme d'ouverture de porte (54), le mécanisme d'ouverture de porte (54) comprenant une colonne de support centrale (60) et un levier de rotation (56) configuré pour pouvoir tourner autour de la colonne de support centrale (60),
dans lequel la pluralité de câbles de poignée (HR, HL) est reliée au levier de rotation (56) dans des positions qui se trouvent en symétrie de rotation à 180° l'une par rapport à l'autre,
dans lequel la pluralité de câbles de verrou (TR, TL) est reliée au levier de rotation (56) dans des positions faisant face respectivement aux positions où les câbles de poignée (HR, HL) sont reliés au levier de rotation (56) et se trouvent en symétrie de rotation à 180° l'une par rapport à l'autre,
dans lequel le levier de rotation (56) est configuré pour tourner autour de la colonne de support centrale (60) en réponse à une entrée d'actionnement provenant d'une unité de la pluralité d'unités d'actionnement de porte (30R, 30L) transmise par un câble de la pluralité de câbles de poignée (HR, HL), de façon à transmettre la sortie d'actionnement, par l'intermédiaire de la pluralité de câbles de verrou (32R, 32L).

6. Mécanisme d'ouverture et de fermeture de porte d'automobile selon la revendication 5,
dans lequel le levier de rotation (56) comprend un bouton configuré pour être actionné manuellement par un passager d'automobile pour ouvrir la porte (10).

7. Automobile avec une porte de toit (10) comprenant le mécanisme d'ouverture et de fermeture de porte d'automobile selon l'une quelconque des revendications précédentes,
dans lequel la porte de toit (10) se trouve au-dessus de la carrosserie (12), l'avant de la porte de toit (10) étant fixé sur la carrosserie (12) par l'intermédiaire d'un mécanisme rotatif (24), la porte de toit (10) étant configurée pour tourner verticalement autour du mécanisme rotatif (24).
